# EUROPÄISCHE PATENTANMELDUNG

(11) **EP 3 163 861 A1**
(43) Veröffentlichungstag der Anmeldung: **03.05.2017**
(21) Anmeldenummer: 15191512.1
(22) Anmeldetag: 26.10.2015
(51) Int. Cl.: H04N 1/60

(54) **LERNENDES TESTCHARTOPTIMIERUNGSVERFAHREN**

(71) Anmelder: GMG GmbH & Co. KG, 72072 Tübingen (DE)
(72) Erfinder: Hoffstadt, Hanno, 89077 Ulm (DE); Subotin, Zoran, 72127 Kusterdingen (DE)
(74) Vertreter: Stenger Watzke Ring

(57) **Zusammenfassung**

Um ein Verfahren zur Optimierung bei der Erstellung von Testcharts dahingehend zu verbessern, dass die Qualität der Priorisierung verbessert wird, wird ein Verfahren zur Optimierung von einer Vielzahl von Testpatches umfassenden Testcharts für Druckvorgänge vorgeschlagen, wobei unter der Vorgabe des Zieldruckverfahrens, der geplanten Farbanzahl sowie Farbidentifikation und der geplanten Mischintentionen eine Priorisierung der Testpatches vorgenommen und gemäß der Priorisierung eine Testpatchzusammestellung erfolgt, wobei das Testchart gedruckt, das gedruckte Testchart farbmetrisch vermessen und das Ergebnis zur Optimierung der Priorisierung verwendet wird.

## Beschreibung

Die vorliegende Erfindung betrifft ein Verfahren zur Optimierung von einer Vielzahl von Testpatches umfassenden Testcharts für Druckvorgänge. Insbesondere dient die Erfindung der Bereitstellung eines Verfahrens zur Optimierung von Priorisierungsvorgängen.

Es ist bekannt, im Zusammenhang mit Druckvorgängen sogenannte Testcharts zu drucken. Dabei handelt es sich um Felder einer im wesentlichen vorgegebenen Geometrie, die mit unterschiedlichen Farben bedruckt sind. Grundsätzlich basieren Druckvorgänge darauf, dass pro Druckpunkt jede der für den Druck zur Verfügung stehenden Farben in einem prozentualen Anteil von 0-100 % gedruckt wird. Das Endergebnis ist dann eine bestimmte Farberscheinung an dem jeweiligen Druckpunkt. Um nun die Qualität des jeweiligen konkreten Druckergebnisses prüfen zu können, insbesondere meßtechnisch nachvollziehen zu können, ist es üblich, die das Testchart ausmachenden Felder, die sogenannten Testpatches, nach bestimmten Regeln zu drucken. So wird zunächst für jede vorhandene und zur Verwendung vorgesehenen Farbe in einem vorgegebenen prozentualen Raster jeweils ein Testpatch gedruckt.

Nimmt man beispielsweise an, dass vier Farben für den vorliegenden Druck vorgesehen sind, so wird man beispielsweise in einem Raster von 10 % jeweils ein Testpatch mit dem prozentualen Anteil einer Farbe drucken. Es entstehen somit vier Reihen von je zehn Testpatches, d.h. für jede Farbe von 0-100 % in einem Raster von zehn. Weiterhin kann man nun Patches erzeugen, bei welchen der prozentuale Anteil aller Farben variiert wird. Bei vier Farben ergeben sich üblicherweise etwa 2000 Patches für prozentuale Raster der jeweiligen Einzelfarbe und der jeweiligen Mischungsmöglichkeiten. Bei sieben Farben indes ergeben sich bereits beispielsweise 10.000 bis 20.000 Patches.

Zunächst einmal bedeutet die Herstellung von Testcharts einen hohen wirtschaftlichen Aufwand. Auf den unterschiedlichen Druckerzeugnissen muss der jeweilige Platz für das beabsichtigte Testchart vorgesehen werden. Dann ist offensichtlich, dass mit der Herstellung eines Testcharts ein erheblicher Farbverbrauch verbunden ist. Je nach Druckverfahren und je nach Größe des Testcharts kann es vorkommen, dass ganze Druckbögen ausschließlich zur Herstellung von Testcharts eingesetzt werden, was den wirtschaftlichen Aufwand weiterhin erheblich erhöht. Ganze Druckanlagen werden zumindest zeitweise zur reinen Testcharts Erstellung verwendet. Druckerzeugnisse müssen unter Umständen an das Bedürfnis zur Testchart Herstellung angepasst werden.

Durch Stichprobenkontrollen kann nun durch Vermessung der einzelnen Testpatches geprüft werden, ob die Qualität des Druckerzeugnisses den Anforderungen entspricht.

Es ist bekannt, dass bei den unterschiedlichen Druckverfahren unterschiedliche Qualitätsprobleme gegeben sein können. Im sogenannten Flexo-Druck ist es üblicherweise der sogenannte Lichterbereich, also der Bereich heller Farben, der problematisch sein kann.

Kürzlich wurde ein Verfahren zur Erstellung von Testcharts dahingehend vorgeschlagen, dass der technische und wirtschaftliche Aufwand zur Erstellung von Testcharts verringert wird.

Gemäß dem Vorschlag werden eine Reihe von Vorgaben und Eingangsparametern dazu verwendet, eine Priorisierung der Testpatches vorzunehmen. Vorgaben und Eingangsparameter sind die Identifikation des Zieldruckverfahrens, die geplante Farbanzahl, die Farbidentifikation und die geplanten Mischintentionen. Priorisierung der Testpatches bedeutet, dass unter Berücksichtigung der Vorgaben die einzelnen Testpatches nach ihrer Wichtigkeit geordnet werden. Gemäß dieser Priorisierung wird dann eine Zusammenstellung von Testpatches erstellt, die als Testchart druckbar ist. Auf diese Weise ist es möglich, ohnehin bekannte oder unwichtige Testpatches gar nicht zu drucken, ganz zu vermeiden oder nur dann, wenn ausreichend Zeit, Platz und/oder wirtschaftliche Mittel gegeben sind.

Bei dem gattungsgemäßen Vorschlag wird für die Testpatch Zusammenstellung eine Vorgabe des für ein Testcharts vorgegebenen Platzes berücksichtigt. Das bedeutet, dass je nach Druckvorhaben ein Bereich auf den Produkt Zeugnissen vorgesehen werden kann, der einteilig oder auch mehrteilig sein kann, so das im Vorfeld festgelegt ist, in welche Bereiche Testcharts druckbar sind. Je nachdem, wie viel Platz sich daraus ergibt, kann anhand der Priorisierung dann die Reihenfolge der Testpatches abgearbeitet und auf diese Weise ein Testcharts erstellt werden, welches die für den vorliegenden Druckauftrag wichtigsten Patches umfasst.

Das gattungsgemäße Verfahren dient der Optimierung bei der Herstellung von Testcharts. Der wirtschaftliche Aufwand von Druckvorgängen wird dadurch erheblich reduziert. Weiterhin können die Testcharts hinsichtlich der Sortierung der Testpatches optimiert werden, was Messvorgänge ebenfalls vereinfacht und verbessert.

Allerdings basieren bei den gattungsgemäßen Verfahren die Priorisierungen auf Modelannahmen.

Ausgehend vom vorbeschriebenen Stand der Technik liegt der vorliegenden Erfindung die Aufgabe zugrunde, ein Verfahren zur Optimierung bei der Erstellung von Testcharts dahingehend zu verbessern, dass die Qualität der Priorisierung verbessert wird.

Zur technischen Lösung dieser Aufgabe schlägt die Erfindung ein Verfahren mit den Merkmalen des Patentanspruches 1 vor. Weitere Vorteile und Merkmale der Erfindung ergeben sich auch den Unteransprüchen.

Gemäß der Erfindung wird das Testchart gedruckt und das gedruckte Testchart farbmetrisch vermessen. Das Ergebnis wird nun zur Optimierung der Priorisierung verwendet. Zu diesem Zweck kann das Ergebnis gespeichert werden. Es ist möglich, auf der Basis der Messergebnisse eine vollständige Repriorisierung vorzunehmen. So kann die Messung beispielsweise Testpatches ergeben, die äußerst gering von den Modellannahmen für die priorisierten Testpatches abweichen. Für diese braucht zukünftig keine Priorisierung stattfinden. Es ist auch möglich, herauszustellen, dass bestimmte Farbbereiche und damit Testpatchbereiche insgesamt in der Regel zwischen Modellannahmen für die Priorisierung und vermessenem Druckergebnis kaum Unterschiede bringen.

Solche Ergebnisse können bei zukünftigen Priorisierungsvorgängen vernachlässigt oder zur Optimierung eingesetzt werden. So kann beispielsweise die Anzahl der Testpatches reduziert werden oder alternativ bei Verwendung gleicher Fläche eine bessere Qualität durch eine andere Priorisierung der Testpatches erzielt werden. Schlussendlich kann das gesamte Priorisierungsmodel optimiert und angepasst werden.

Ein weiterer Vorteil der Erfindung ergibt sich, wenn die Messergebnisse in einer abfragbaren Datenbank hinterlegt werden. Auf diese Weise kann das System nicht nur lokal bezogen, also in Bezug auf einen Auftrag, eine Produktionslinie oder dergleichen, sondern auch global über Nutzung von Medien wie Internet und dergleichen eingesetzt werden. Insbesondere können der Abgleich und die Repriorisierung auch automatisch erfolgen, indem beispielsweise vorgegebene Abweichungstoleranzen überprüft werden.

Mit der Erfindung wird ein einfach umsetzbares Verfahren zur Optimierung von Testcharts vorgeschlagen, welches den wirtschaftlichen Aufwand von Druckvorgängen erheblich reduzieren und die Ergebnisse deutlich verbessern kann. Weitere Vorteile und Merkmale der Erfindung ergeben sich aus der folgenden Beschreibung anhand der Figuren. Dabei zeigen:
- Figur 1: eine beispielhafte Darstellung einer Datensammlungsmaske zur Zusammenstellung der Vorgaben
- Figur 2: ein unter Berücksichtigung der Vorgaben gemäß Figur 1 optimiertes Testchart
- Figur 3: eine alternative beispielhafte Darstellung einer Datensammlungsmaske zur Zusammenstellung der Vorgaben

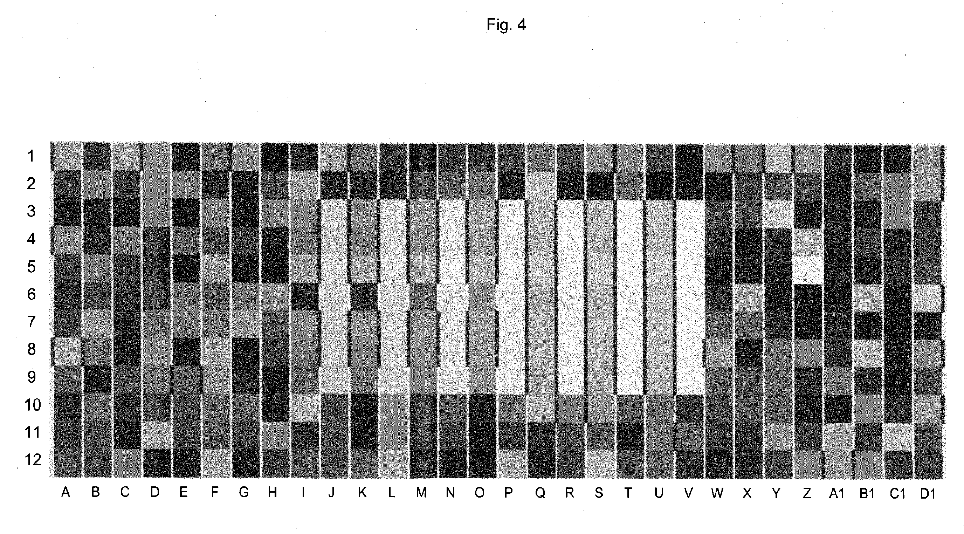

- Figur 4: ein unter Berücksichtigung der Vorgaben gemäß Figur 3 erstes optimiertes Testchart

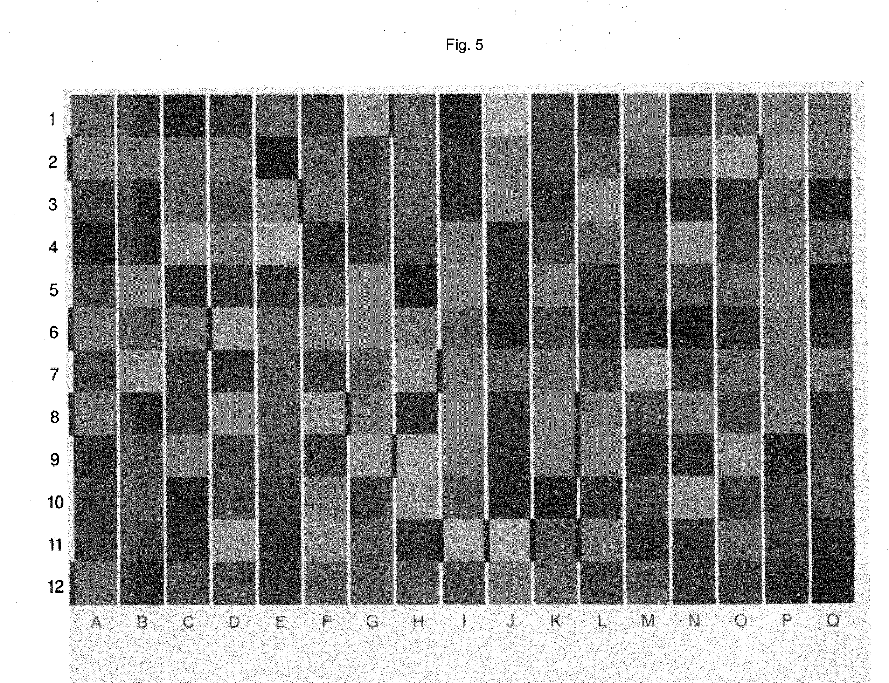

- Figur 5: ein unter Berücksichtigung der Vorgaben gemäß Figur 3 zweites optimiertes Testchart.

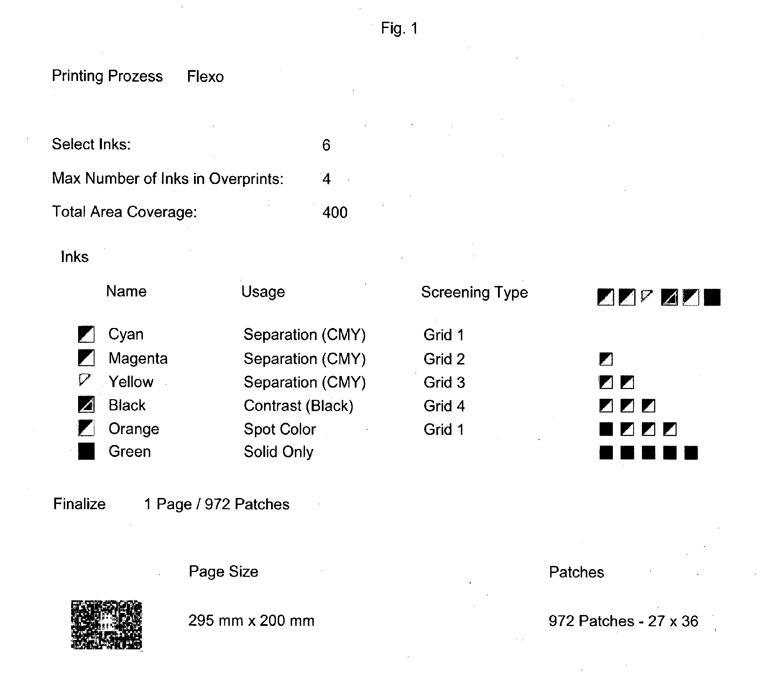

Gemäß Figur 1 sind Daten zur Zusammenstellung der Vorgaben für einen geplanten Druck zusammengestellt. Zunächst wurde unter dem Aspekt printing prozess festgelegt, dass ein sogenannter Flexo-Druck erfolgen soll. Dann wurde festgelegt, dass sechs Farben verwendet werden sollen, alle im Überdruck. Zwei Farben (Cyan und Orange) nutzten gleiche Raster-Konfiguration und können somit nicht übereinander gedruckt werden, eine Farbe (Green) kommt nur als Solid vor. Weiterhin wurde für jede der Farben festgelegt, welchem Zweck diese dienen. So wurden Farben als Kontrastfarben identifiziert, als Separation-Farben, als Einzelfarbe und dergleichen. Schlussendlich wurde ein Feld von 295 × 200 mm als Feld für ein Testchart festgelegt.

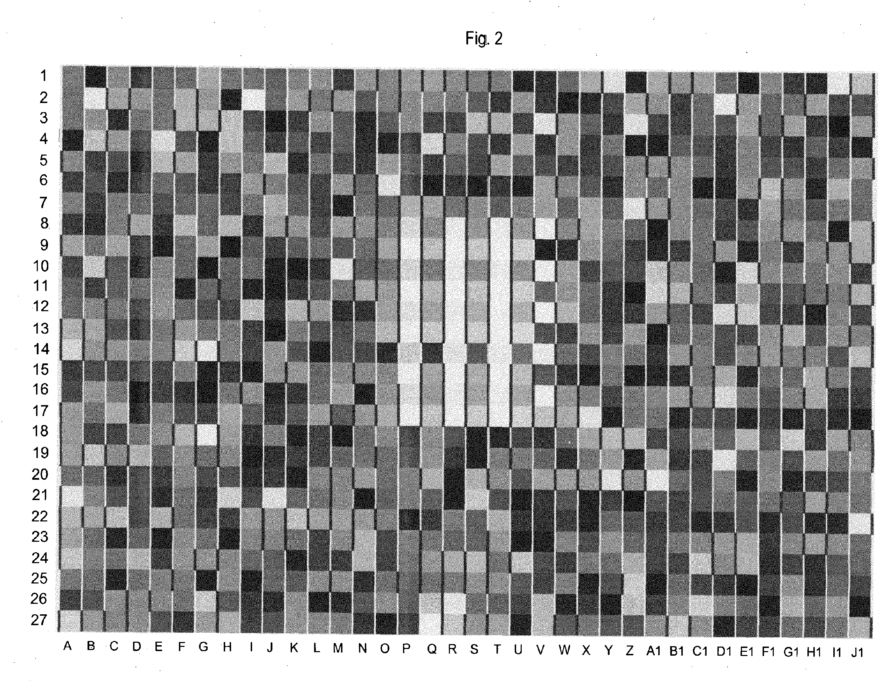

Aufgrund der Platzvorgabe wurde errechnet, dass 972 Patches druckbar sind, die in 27 Zeilen mit jeweils 36 Spalten platziert werden. Entsprechend wurde das Testchart gemäß Figur 2 gedruckt. Man sieht bereits, dass gegenüber herkömmlichen sechs-Farbprozessen eine erheblich reduzierte Anzahl von Patches erzeugt wurde. Diese enthält die für das Druckverfahren kritischen Farbkombination und Einzelfarbbereiche, um auf diese Weise optimale Messergebnisse bei verringertem Aufwand erzielen zu können.

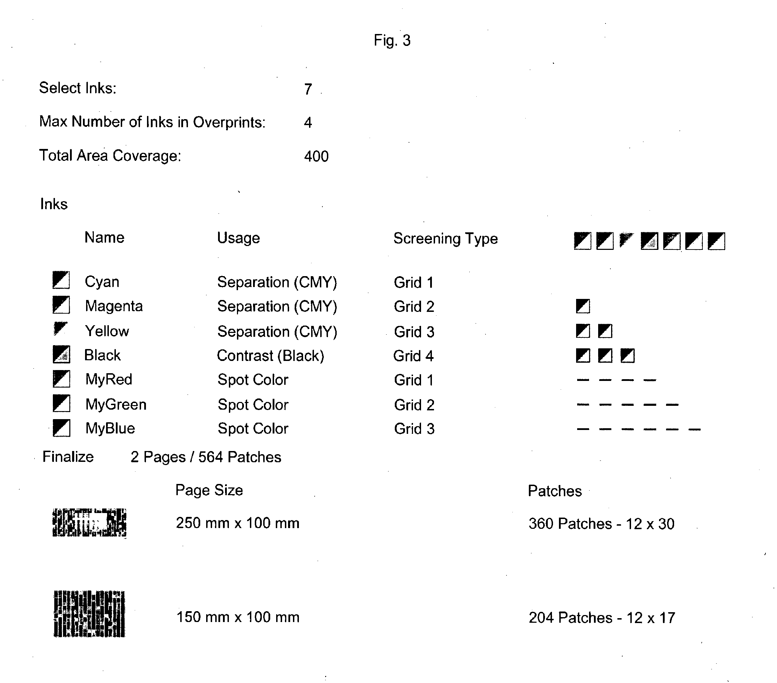

Gemäß Figur 3 wurde festgelegt, dass sieben Farben eingesetzt werden, dabei vier im Überdruck. Auch hier wurden die entsprechenden Eigenschaften festgelegt. Als Platz wurden zwei Bereiche angegeben mit unterschiedlichen Maßen. Insofern wurde anhand der Priorisierung eine Aufteilung vorgenommen. Es ergeben sich dann die in den Figuren vier und fünf gezeigten zwei Patch-Felder, die zusammen das für den vorliegenden Vorgang optimale Testchart ergeben.

Die beschriebenen Ausführungsbeispiele dienen nur der Erläuterung und sind nicht beschränkend. Insbesondere lassen sich auch weitere Merkmale im Rahmen der Erfindung einsetzen.

## Patentansprüche

1. Verfahren zur Optimierung von einer Vielzahl von Testpatches umfassenden Testcharts für Druckvorgänge, wobei unter der Vorgabe des Zieldruckverfahrens, der geplanten Farbanzahl sowie Farbidentifikation und der geplanten Mischintentionen eine Priorisierung der Testpatches vorgenommen und gemäß der Priorisierung eine Testpatchzusammestellung erfolgt, **dadurch gekennzeichnet, dass** das Testchart gedruckt, das gedruckte Testchart farbmetrisch vermessen und das Ergebnis zur Optimierung der Priorisierung verwendet wird.

2. Verfahren nach Anspruch 1, **dadurch gekennzeichnet, dass** das Vermessungsergebnis gespeichert wird.

3. Verfahren nach einem der vorhergehenden Ansprüche, **dadurch gekennzeichnet, dass** das Ergebnis zur Repriorisierung verwendet wird.

4. Verfahren nach Anspruch 3, **dadurch gekennzeichnet, dass** im Falle geringer Abweichungen zwischen einem priorisierten Testpatch und einem gemessenen Testpatch diese aus der Priorisierung gestrichen wird.

5. Verfahren nach einem der vorhergehenden Ansprüche, **dadurch gekennzeichnet, dass** zur Optimierung die Anzahl der Testpatches reduziert wird.

6. Verfahren nach einem der vorhergehenden Ansprüche, **dadurch gekennzeichnet, dass** zur Optimierung eine veränderte Priorisierung verwendet wird.

7. Verfahren nach einem der vorhergehenden Ansprüche, **dadurch gekennzeichnet, dass** zur Optimierung das Priorisierungsmodel angepasst wird.

8. Verfahren nach einem der vorhergehenden Ansprüche, **dadurch gekennzeichnet, dass** das Ergebnis in einer abfragbaren Datenbank hinterlegt wird.
